# EUROPEAN PATENT APPLICATION

(11) **EP 4 826 629 A1**
(43) Date of publication of application: **21.10.2026**
(21) Application number: 24903442.2
(22) Date of filing: 19.11.2024
(51) Int. Cl.: G06Q 30/0601

(54) **ORDERING DEVICE, ORDERING METHOD, AND PROGRAM**

(30) Priority: 12.12.2023 JP 2023209261
(71) Applicant: Nikon-Essilor Co., Ltd., Tokyo 130-0026 (JP); Iris Communication Kabushiki Kaisha, Tokyo 101-0047 (JP)
(72) Inventor: TAKEDOMI, Yuka, Tokyo 130-0026 (JP); YANO, Masafumi, Sendai-shi, Miyagi 981-8004 (JP)
(74) Representative: Viering, Jentschura & Partner mbB Patent- und Rechtsanwälte
(86) International application number: PCT/JP2024/040944
(87) International publication number: WO 2025/126783

(57) **Abstract**

[Problem] To enable order placement of a tinted lens adapted to visual characteristics of a wearer.

[Solution] An order placement device that places an order for a tinted lens used as an eyeglass lens, comprising: a processing unit that accepts a transmittance of the tinted lens for each of a plurality of wavelength ranges set in advance; and an output unit that outputs order placement data including the transmittance that is input.

## Description

### Technical Field

The present disclosure relates to an order placement device, an order placement method, and a program.

### Background Art

Tinted lenses are sometimes employed as eyeglass lenses. Such tinted lenses are often selected primarily for purposes such as fashion, glare reduction, and blue light attenuation. Therefore, in most cases, a tinted lens suited to one's preference is ordered by specifying a color and a density of the tinted lens.

Tinted lenses serve as an essential tool for enhancing the QOL (Quality of Life) of wearers with visual hypersensitivity or color vision deficiency. From the perspective of enhancing the QOL of a wearer, it may be preferable to wear a tinted lens adapted to the visual characteristics of the wearer, rather than simply selecting a tinted lens with a preferred color and density.

### Citation List

### Patent Literature

[Patent Literature 1] Japanese Unexamined Patent Application, First Publication No. 2013-54275

### Summary of Invention

### Solution to Problem

According to a first aspect of the present disclosure, provided is an order placement device that places an order for a tinted lens used as an eyeglass lens, comprising: a processing unit that accepts transmittance data indicating a transmittance of the tinted lens for each of a plurality of wavelength ranges set in advance; and an output unit that outputs order placement data including the transmittance data that is input.

According to a second aspect of the present disclosure, provided is an order placement method that places an order for a tinted lens used as an eyeglass lens, comprising: accepting transmittance data indicating a transmittance of the tinted lens for each of a plurality of wavelength ranges set in advance; and outputting order placement data including the transmittance data accepted.

According to a third aspect of the present disclosure, provided is a program that causes a computer to function as the above order placement device.

The above summary of the invention does not enumerate all necessary features of the present invention. Subcombinations of these feature groups may also constitute the invention.

### Brief Description of Drawings

Fig. 1 is a schematic configuration diagram of a tinted lens order placement system according to the present embodiment.
Fig. 2 is a hardware configuration example of an order placement device according to the present embodiment.
Fig. 3 is a functional block diagram of a processor according to the present embodiment.
Fig. 4 is a diagram showing an example of a setting screen according to the present embodiment.
Fig. 5 is a display example of predicted luminous transmittance and color tone according to the present embodiment.
Fig. 6 is a flowchart of a tinted lens order placement method according to the present embodiment.

### Description of Embodiments

Hereinafter, the present invention will be described through an embodiment of the invention. However, the invention defined in the claims is not limited to the following embodiment, and not all combinations of features described in the embodiment are essential to the means by which the present invention solves the above problems.

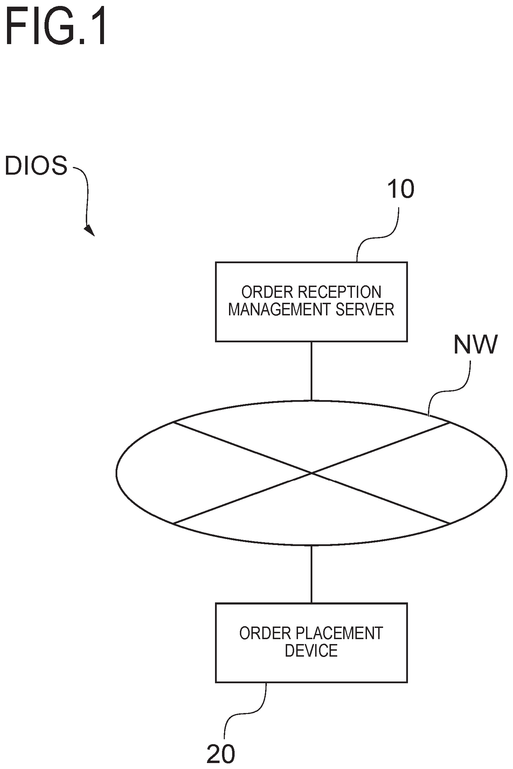

Fig. 1 is a schematic configuration diagram of a tinted lens order placement system DIOS according to the present embodiment. As shown in Fig. 1, the tinted lens order placement system DIOS includes an order reception management server 10 and multiple order placement devices 20.

The order reception management server 10 communicates with each of the multiple order placement devices 20 via a communication network NW. The order reception management server 10 transmits and receives data to and from each order placement device 20 by communicating with each of multiple order placement devices 20 via the communication network NW. The communication network NW may be, for example, a transmission path for wireless communication, a transmission path for wired communication, or a combination of a transmission path for wireless communication and a transmission path for wired communication. The transmission path for wireless communication is, for example, a wireless LAN. The communication network NW may be any of a mobile communication network (for example, a cellular network), a wireless packet communication network, the Internet, and a dedicated line, or a combination thereof. For example, the communication network NW may use a short-range wireless communication standard (for example, ZigBee (registered trademark)), Wi-Fi (registered trademark), or Bluetooth (registered trademark).

The order reception management server 10 is, for example, a server device managed by an eyeglass manufacturer. The order reception management server receives order placement data of tinted lenses from the order placement device 20 via the communication network NW. The tinted lenses are used as eyeglass lenses. The order reception management server manages, for example, the order placement data of tinted lenses for each wearer. The order reception management server may further manage the order placement data of tinted lenses for each order placement device 20. For example, upon receiving order placement data of tinted lenses, the order reception management server 10 displays the order placement data on a display of the order reception management server 10.

An order recipient, for example, confirms the contents of the order placement data displayed on the display of the order reception management server 10, and requests a factory to manufacture the tinted lenses indicated by the order placement data. For example, when there is stock of the tinted lenses indicated by the order placement data, the order recipient arranges delivery of the tinted lenses.

The order placement device 20 transmits and receives data to and from the order reception management server 10 by communicating with the order reception management server 10 via the communication network NW. The order placement device 20 is an information processor, examples of which include a mobile phone, a smartphone, a tablet terminal, a personal computer, and a wearable terminal. The order placement device 20 may be a stationary device or a portable device. The order placement device 20 may be provided, for example, in a store of an eyeglass shop, or may be a device owned by a wearer. In other words, the order placement device 20 may be a device owned by an eyeglass manufacturer or an eyeglass shop, or may be a device owned by an individual.

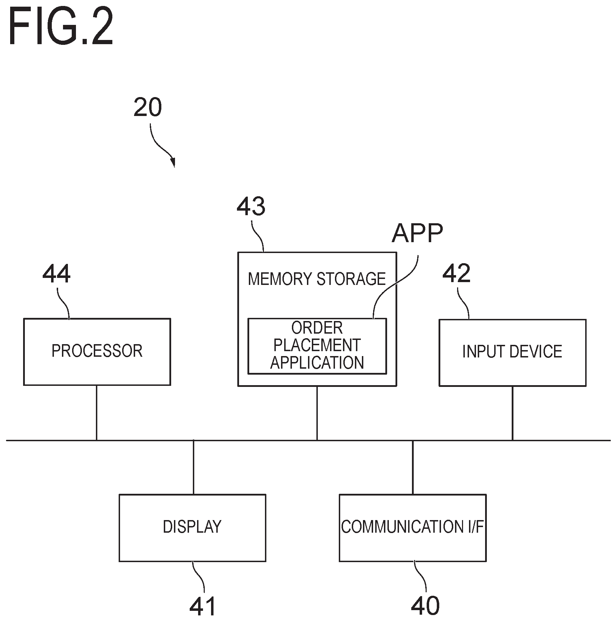

Fig. 2 is a hardware configuration example of the order placement device 20 according to the present embodiment. As shown in Fig. 2, the order placement device 20 includes a communication interface (hereinafter, referred to as a "communication I/F") 40, a display 41, an input device 42, a memory storage 43, and a processor 44.

The communication I/F 40 is capable of communicating with the order reception management server 10. The display 41 displays various data. The display 41 is, for example, a liquid crystal display or an organic EL (Electro Luminescence) display. For example, the display 41 may include a touch panel type display screen.

The input device 42 is operable by a user, and inputs data corresponding to an operation of the user to the processor 44. The input device 42 includes, for example, a touch panel, a touch display, hardware keys such as a keyboard, a pointing device such as a mouse, and a microphone (operation input by voice).

The memory storage 43 may include, for example, a non-volatile or volatile semiconductor memory (for example, RAM (Random Access Memory), ROM (Read Only Memory), a flash memory, EPROM (Erasable Programmable Read Only Memory), EEPROM (Electrically Erasable Programmable Read Only Memory)).

An application program for placing an order for tinted lenses (hereinafter, referred to as "order placement application") APP is installed in the memory storage 43. The memory storage 43 stores data and the like processed by the order placement application APP.

The order placement application APP may be provided by a computer-readable memory storage medium that is a recording medium readable by a computer. The order placement application APP is read from the computer-readable memory storage medium, installed in the memory storage 43, which is also an example of a computer-readable memory storage medium, and executed by the processor 44. The order placement application APP may also be downloaded from an external device via a wired or wireless communication network. That is to say, the order placement application APP may be provided via a computer-readable memory storage medium or via a telecommunication line such as a network.

Examples of the computer-readable medium may include an electronic memory storage medium, magnetic memory storage medium, optical memory storage medium, electromagnetic memory storage medium, and semiconductor memory storage medium. More specific examples of the computer-readable medium may include a floppy (registered trademark) disk, diskette, hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), digital versatile disc (DVD), Blu-ray (RTM) disc, memory stick, and integrated circuit card.

The processor 44 is, for example, a processor including one or more of a CPU (Central Processing Unit), an MPU (Micro Processing Unit), a GPU (Graphics Processing Unit), and an FPGA (Field-Programmable Gate Array).

The processor 44 controls various processes for placing an order for tinted lenses by executing the order placement application APP stored in the memory storage 43. The processor 44 accepts various data from the input device 42 or the communication I/F 40. The processor 44 performs certain arithmetic processing on the basis of the accepted data and displays a result of the arithmetic processing on the display 41. The processor 44 may transmit the data accepted from the input device 42 to the order reception management server 10 via the communication I/F 40.

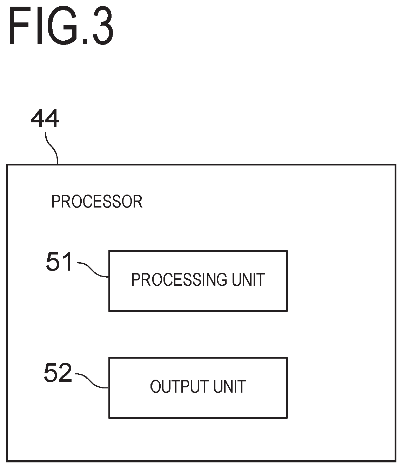

Fig. 3 is a functional block diagram of the processor 44 according to the present embodiment. As shown in Fig. 3, the processor 44 includes a processing unit 51 and an output unit 52. The processing unit 51 and the output unit 52 are implemented, for example, by the order placement application APP stored in the memory storage 43 being executed by the processor 44.

The processing unit 51 controls display on the display 41. The processing unit 51 displays a setting screen 100 on the display 41. The setting screen 100 is a screen for inputting data necessary for placing an order for tinted lenses.

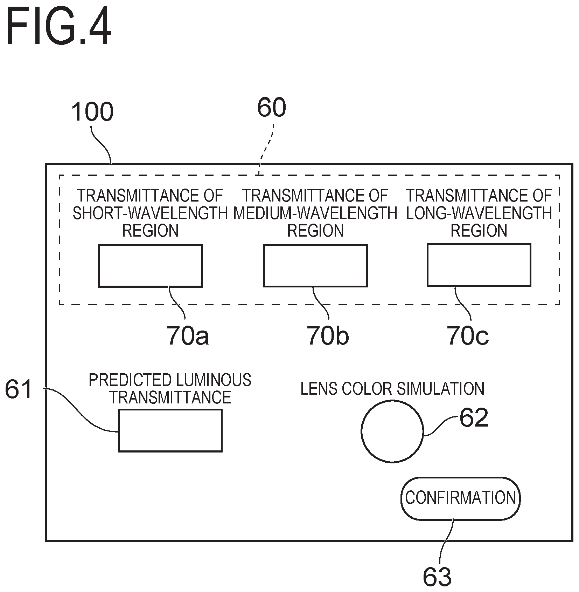

Fig. 4 is a diagram showing an example of the setting screen 100 according to the present embodiment. The setting screen 100 includes a first display region 60, a second display region 61, a third display region 62, and a confirmation icon 63.

In the first display region 60, multiple input fields 70 corresponding to respective wavelength ranges are displayed. Each input field 70 is used to input data indicating a transmittance of an order placement target with respect to the corresponding wavelength range (hereinafter, referred to as "transmittance data"). The order placement target refers to a tinted lens ordered by a user (for example, a wearer) using the order placement device 20. The transmittance data may be any data that directly or indirectly represents transmittance, and may be a numerical value of transmittance or may be data other than a numerical value. The transmittance data may be a cutoff rate of light in the corresponding wavelength range.

The multiple wavelength ranges may be two or more wavelength ranges. In the example shown in Fig. 4, three wavelength ranges, namely a first wavelength band, a second wavelength band, and a third wavelength band, are set as an example of the multiple wavelength ranges. Specifically, the first wavelength band, the second wavelength band, and the third wavelength band are wavelength ranges obtained by dividing a wavelength range of visible light into three parts. For the purpose of distinguishing the three input fields 70 corresponding to the three wavelength ranges, the input field 70 corresponding to the first wavelength range may be referred to as a "first input field 70a", the input field 70 corresponding to the second wavelength range may be referred to as a "second input field 70b", and the input field 70 corresponding to the third wavelength range may be referred to as a "third input field 70c".

For example, a wavelength range of visible light is divided into three parts, and among the three divided wavelength ranges, the lowest wavelength range is defined as a first wavelength band, the highest wavelength range is defined as a third wavelength band, and an intermediate wavelength range is defined as a second wavelength range. The first wavelength band, the second wavelength band, and the third wavelength band may be wavelength ranges obtained by equally dividing the wavelength range of visible light into three parts. The first wavelength band, the second wavelength band, and the third wavelength band may be wavelength ranges obtained by dividing the wavelength range of visible light according to a certain rule. For example, the first wavelength band, the second wavelength band, and the third wavelength band are wavelength ranges obtained by dividing the wavelength range of visible light according to spectral sensitivities (spectral absorption characteristics) of three cone cells (S cone cells, M cone cells, and L cone cells) of a human retina. These three cone cells have different spectral sensitivities.

For example, the first wavelength band is set according to the spectral sensitivity of S cone cells. The S cone cells are cone cells having higher spectral sensitivity than the other two cone cells with respect to a short-wavelength region in the wavelength range of visible light. In other words, the S cone cells are cone cells that respond to the short-wavelength region. The S cone cells have a peak wavelength of sensitivity at around 430 nm in the short-wavelength region. That is to say, the short-wavelength region is a wavelength band range including 430 nm. The first wavelength band is set according to the short-wavelength region. The first wavelength band may be set in the short-wavelength region or may be set in a range including the short-wavelength region. As an example, the first wavelength band is 380 nm or more and less than 500 nm.

For example, the third wavelength band is set according to the spectral sensitivity of L cone cells. The L cone cells are cone cells having higher spectral sensitivity than the other two cone cells with respect to a long-wavelength region in the wavelength range of visible light. In other words, the L cone cells are cone cells that respond to the long-wavelength region. The L cone cells have a peak wavelength of sensitivity at around 560 nm in the long-wavelength region, and this sensitivity region is also a region overlapping with a sensitivity region of M cone cells described later. At around 630 nm, the sensitivity of the M cone cells becomes considerably low, and the influence is almost entirely on the L cone cells. Therefore, as an example of the present embodiment, the long-wavelength region is a wavelength band range including 630 nm. The third wavelength band is set according to the long-wavelength region. The third wavelength band may be set in the long-wavelength region or may be set in a range including the long-wavelength region. As an example, the third wavelength band is 600 nm or more and less than 780 nm.

For example, the second wavelength band is set according to the spectral sensitivity of M cone cells. The M cone cells are cone cells having higher spectral sensitivity than the other two cone cells with respect to a medium-wavelength region in the wavelength range of visible light. In other words, the M cone cells are cone cells that respond to the medium-wavelength region. The M cone cells have a peak wavelength of sensitivity at around 530 nm in the medium-wavelength region. That is to say, the medium-wavelength region is a wavelength band range including 530 nm. The second wavelength band is set according to the medium-wavelength region. The second wavelength band may be set in the medium-wavelength region or may be set in a range including the medium-wavelength region. As an example, the second wavelength band is 500 nm or more and less than 600 nm.

As shown in Fig. 4, in the setting screen 100, in the first display region 60, a first input field 70a corresponding to the first wavelength range, a second input field 70b corresponding to the second wavelength range, and a third input field 70c corresponding to the third wavelength range are provided. On the setting screen 100, information indicating the first wavelength range (for example, "transmittance of short-wavelength region") is displayed in the vicinity of the first input field 70a. On the setting screen 100, information indicating the second wavelength range (for example, "transmittance of medium-wavelength region") is displayed in the vicinity of the second input field 70b. On the setting screen 100, information indicating the third wavelength range (for example, "transmittance of long-wavelength region") is displayed in the vicinity of the third input field 70c.

In the first input field 70a, a value desired to be set as transmittance data of the order placement target in the first wavelength range for the wearer (hereinafter, referred to as "first transmittance data") is input. In the second input field 70b, a value desired to be set as transmittance data of the order placement target in the second wavelength range for the wearer (hereinafter, referred to as "second transmittance data") is input. In the third input field 70c, a value desired to be set as transmittance data of the order placement target in the third wavelength range for the wearer (hereinafter, referred to as "third transmittance data") is input. By inputting transmittance data into each of the first input field 70a, the second input field 70b, and the third input field 70c, the transmittance of the order placement target in each of the first wavelength range, the second wavelength range, and the second wavelength range is specified. As a method for inputting the transmittance data into the input field 70, the transmittance data may be directly input into the input field 70, or the transmittance data may be input by selecting arbitrary transmittance data from among multiple candidate values in a pull-down menu.

The transmittance data input to each input field 70 may be set so as to be input in steps of 2% or more and 20% or less from a lower limit value to an upper limit position of an input range. For example, multiple candidate values in a pull-down menu are numerical values in steps of X% (2% ≤ X ≤ 20%) in a range from a lower limit value to an upper limit position of the input range.

The second display region 61 displays a predicted luminous transmittance of the order placement target. The predicted luminous transmittance is an index indicating how much visible light is transmitted, and is so-called visible light transmittance. Upon inputting transmittance data into each of the first input field 70a, the second input field 70b, and the third input field 70c, the predicted luminous transmittance of the order placement target is displayed in the second display region 61. Upon inputting transmittance data into each of the first input field 70a, the second input field 70b, and the third input field 70c, a predicted color tone of the order placement target is displayed in a third display region 62.

The processing unit 51 accepts transmittance data that is input into each input field 70. Accepting transmittance data includes acquiring transmittance data. For example, upon inputting arbitrary transmittance data into the first input field 70a, the processing unit 51 accepts the transmittance data as first transmittance data. That is to say, the transmittance data that is input into the first input field 70a is set as first transmittance data.

For example, upon inputting arbitrary transmittance data into the second input field 70b, the processing unit 51 accepts the transmittance data as second transmittance data. That is to say, the transmittance data that is input into the second input field 70b is set as second transmittance data.

For example, upon inputting arbitrary transmittance data into the third input field 70c, the processing unit 51 accepts the transmittance data as third transmittance data. That is to say, the transmittance data that is input into the third input field 70c is set as third transmittance data.

It should be noted that the input of arbitrary transmittance data into an input field 70 includes both inputting arbitrary transmittance data into a blank input field 70 and changing transmittance data that has already been input into an input field 70. In the case where the transmittance data already input into an input field 70 is changed, the processing unit 51 accepts the changed transmittance data, that is, newly input transmittance data. For example, in a state where a first numerical value has been input in the first input field 70a, if the user changes the numerical value of the first input field 70a from the first numerical value to a second numerical value using the input device 42, the processing unit 51 newly accepts the second numerical value as first transmittance data. That is to say, the processing unit 51 sets the second numerical value, not the first numerical value, as the first transmittance data.

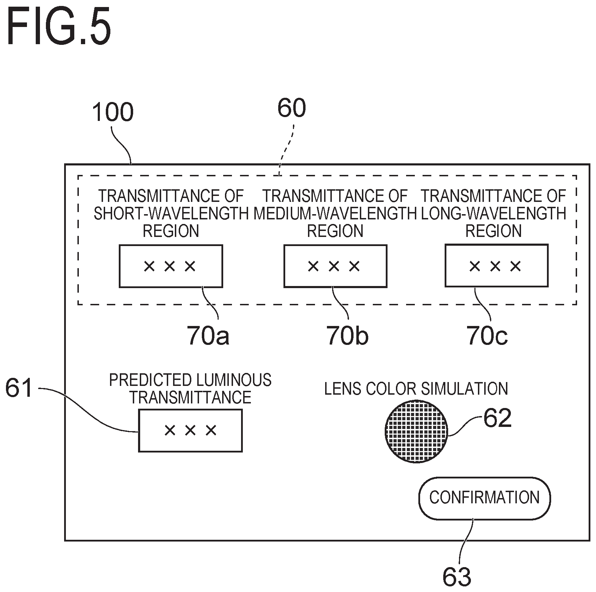

Upon accepting the first transmittance data, second transmittance data, and third transmittance data, the processing unit 51 finds a predicted luminous transmittance corresponding to the accepted first transmittance data, second transmittance data, and third transmittance data. Then, as shown in Fig. 5, the processing unit 51 displays the predicted luminous transmittance in the second display region 61. Upon accepting the first transmittance data, second transmittance data, and third transmittance data, as shown in Fig. 5, the processing unit 51 displays a color tone of the order placement target corresponding to the accepted first transmittance data, second transmittance data, and third transmittance data in the third display region 62.

When the confirmation icon 63 is operated by the input device 42, the processing unit 51 confirms the value input into the first input field 70a as first transmittance data, confirms the value input into the second input field 70b as second transmittance data, and confirms the value input into the third input field 70c as third transmittance data. It should be noted that the confirmation icon 63 being operated means, for example, performing an operation of clicking or touching the confirmation icon 63. The touch operation is, for example, a tap operation, a swipe operation, or a flick operation.

For example, the processing unit 51 disables the confirmation icon 63 in a state where information is not input into at least one of the first input field 70a, the second input field 70b, and the third input field 70c. The processing unit 51 may enable the confirmation icon 63 when information is input in all of the first input field 70a, the second input field 70b, and the third input field 70c. The processing unit 51 may also enable the confirmation icon 63 when information is input in all of the first input field 70a, the second input field 70b, and the third input field 70c and a predetermined condition is satisfied.

For example, the processing unit 51 may enable the confirmation icon 63 after displaying a predicted luminous transmittance and a color tone of an order placement target on the setting screen 100. It should be noted that in the case where transmittance data input into the input field 70 is changed, the processing unit 51 displays a predicted luminous transmittance and a color tone corresponding to the changed transmittance data on the setting screen 100. In such a case, the processing unit 51 may disable the confirmation icon 63 during a period from when the transmittance data is changed until the predicted luminous transmittance and the color tone corresponding to the changed transmittance data are displayed on the setting screen 100.

The output unit 52 outputs order placement data accepted by the processing unit 51 to the order reception management server 10 via the communication I/F 40. In other words, the output unit 52 outputs order placement data having transmittance data of a tinted lens for each of multiple wavelength ranges to the order reception management server 10 via the communication I/F 40. The output unit 52, for example, outputs the order placement data to the order reception management server 10 via the communication I/F 40 when the confirmation icon 63 is operated. The output unit 52 outputs order placement data including, for example, first transmittance data, second transmittance data, and third transmittance data to the order reception management server 10 via the communication I/F 40 on the setting screen 100 shown in Fig. 3.

More specifically, the output unit 52 outputs order placement data including data in which transmittance data input into the input field 70 is associated with a wavelength range corresponding to the input field 70 to the order reception management server 10 via the communication I/F 40. In the example shown in Fig. 3, the output unit 52 outputs to the order reception management server 10 order placement data including first related data in which first transmittance data is associated with data indicating a first wavelength range, second related data in which second transmittance data is associated with data indicating a second wavelength range, and third related data in which third transmittance data is associated with data indicating a third wavelength range. The order placement data may include at least the first related data, the second related data, and the third related data, and may further include other data (for example, a user ID or a delivery deadline).

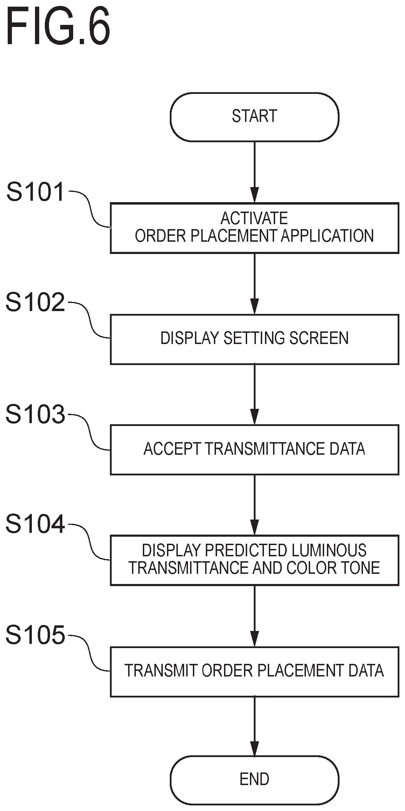

Hereafter, a tinted lens order placement method according to the present embodiment will be described. Fig. 6 is a flowchart of the tinted lens order placement method according to the present embodiment.

In the tinted lens order placement method according to the present embodiment, an operator operates the order placement device 20 to place an order for a tinted lens. Here, in the case where the order placement device 20 is installed in a store of an eyeglass shop, the operator may be a store clerk or a customer visiting the store. In the case where the operator is a store clerk, the clerk operates the order placement device 20 while listening to a request from a wearer who is considering purchasing a tinted lens, thereby placing an order for a tinted lens suitable for the visual characteristics of the wearer.

In the case where the order placement device 20 is a communication terminal (for example, a mobile phone, a smartphone, a tablet terminal, or a personal computer) owned by an individual (for example, the wearer), the operator is a user (for example, the wearer) of the communication terminal. In such a case, the communication terminal functions as the order placement device 20 by having the order placement application APP installed therein.

Hereinafter, a case in which a wearer considering purchasing a tinted lens is an operator will be described as an example. The operator operates the order placement device 20 to activate the order placement application APP in order to place an order for a tinted lens (Step S101).

The operator operates the order placement device 20 on which the order placement application APP has been activated to display the setting screen 100 on an information terminal 2 (Step S102). In other words, when the order placement device 20 accepts, through the input device 42, an operation for displaying the setting screen 100, the order placement device 20 causes the display 41 to display the setting screen 100. It should be noted that the order placement device 20 may cause the display 41 to display the setting screen 100 at a timing when the order placement application APP is activated. In other words, display of the setting screen 100 in Step S102 does not necessarily require an operation by the operator.

The operator operates the input device 42 to input desired transmittance data into each of the first input field 70a, the second input field 70b, and the third input field 70c of the setting screen 100. Upon inputting transmittance data into each of the first input field 70a, the second input field 70b, and the third input field 70c, the order placement device 20 accepts the transmittance data input into each input field 70 (Step S103).

Specifically, the processing unit 51 accepts the transmittance data input into the first input field 70a as first transmittance data. The processing unit 51 accepts the transmittance data input into the second input field 70b as second transmittance data. The processing unit 51 accepts the transmittance data input into the third input field 70c as third transmittance data.

Upon accepting the first transmittance data, the second transmittance data, and the third transmittance data, the processing unit 51 displays, on the setting screen 100, a predicted luminous transmittance and a color tone of the order placement target corresponding to the first transmittance data, the second transmittance data, and the third transmittance data (Step S104). The operator confirms the predicted luminous transmittance and the color tone displayed on the setting screen 100 and operates the confirmation icon 63 if there is no problem. It should be noted that the operator confirms the predicted luminous transmittance and the color tone displayed on the setting screen 100 and, if there is a problem, changes a value of at least one input field 70 among the first input field 70a, the second input field 70b, and the third input field 70c. The order placement device 20 performs the processes of Step S103 and Step S104 each time the value of the input field 70 is changed.

When the confirmation icon 63 is operated, the output unit 52 transmits, to the order reception management server 10, order placement data including first related data in which the first transmittance data is associated with data indicating the first wavelength range, second related data in which the second transmittance data is associated with data indicating the second wavelength range, and third related data in which the third transmittance data is associated with data indicating the third wavelength range (Step S105). When transmission of the order placement data to the order reception management server 10 is completed, the order placement of the tinted lens is completed.

As described above, by using the order placement device 20, an operator can place an order for a tinted lens while individually specifying transmittances of multiple wavelength ranges. That is to say, a wearer can place an order for a tinted lens suitable for the wearer's own visual characteristics, and the wearer's QOL is improved as a result.

Here, as current selection methods for tinted lenses, there are broadly two selection methods, namely, a first selection method and a second selection method. The first selection method is a method of selecting, from among a product lineup in which colors and densities are predetermined, a product matching one's preference. In the first selection method, a wearer places an order by specifying a color name and a density at the time of placing the order. The second selection method is a method called sample tinting, in which a target lens is sent to a lens manufacturer and reproduction of a color and a density equivalent to those of the lens is ordered.

Neither the first selection method nor the second selection method is significantly different in a process of placing an order for a tinted lens with emphasis on an apparent color and density. On the other hand, for wearers having visual hypersensitivity or color vision deficiency, tinted lenses are an essential tool for enhancing their QOL. Wearing tinted lenses adapted to the visual characteristics of the wearer, rather than preferences for color and density, is desirable for QOL enhancement of wearers having visual hypersensitivity or color vision deficiency. However, both the first selection method and the second selection method are methods for placing an order for a tinted lens with emphasis on an apparent color and density, and currently, a tinted lens adapted to the visual characteristics of a wearer cannot be ordered through these methods.

The order placement device 20 according to the present embodiment accepts transmittance data of a tinted lens for each of multiple wavelength ranges and outputs, to the order reception management server 10, order placement data including the accepted transmittance data for each wavelength range. With such a configuration, it becomes possible to place an order for a tinted lens adapted to the visual characteristics of a wearer.

Further, visual hypersensitivity and color vision deficiency are considered to be caused by sensitivities of three cone cells (S cone cells, M cone cells, and L cone cells) on a retina being higher or lower than those of healthy individuals. Given such a background, the order placement device 20 is capable of individually specifying transmittances of three wavelength ranges corresponding to spectral sensitivities of the three cone cells when placing an order for a tinted lens. As a result, it becomes possible to place an order for a tinted lens more adapted to the visual characteristics of a wearer. In other words, when placing an order for a tinted lens, a wearer can place the order by specifying strengths of stimuli received by the respective three cone cells (cone stimulation amounts) according to the wearer's own visual characteristics.

In the present embodiment, three wavelength ranges are exemplified as multiple wavelength ranges for specifying transmittance of a tinted lens, but the present disclosure is not limited thereto. For example, the multiple wavelength ranges may be four wavelength ranges. In such a case, for example, visible light may be divided into four equal parts. As an example, assuming that a wavelength range of visible light is 380 nm to 780 nm, a first wavelength range is 380 nm or more and less than 480 nm, a second wavelength range is 480 nm or more and less than 580 nm, a third wavelength range is 580 nm or more and less than 680 nm, and a fourth wavelength range is 680 nm or more and 780 nm or less.

When a reference is made to the execution order of the processes such as operations, procedures, steps, and stages in the apparatus, the system, the program, and the method shown in the claims, specification, and drawings, wording such as "before" or "prior to" is not explicitly used. Also, it should be noted that the processes may be executed in any order unless an output of a particular process is used by the following process. In the claims, specification and drawings, a flow of operations may be described by using the terms such as "first" and "next" for the sake of convenience. This, however, does not necessarily mean that the operations must be performed in the described order. Furthermore, the contents of Japanese Patent Application No. 2023-209261 and all documents cited in the present specification are incorporated herein by reference to the extent permitted by law.

### Description of Reference Signs

- DIOS:: Tinted lens order placement system
- 10:: Server device
- 20:: Order placement device
- 51:: Processor
- 52:: Output unit
- 100:: Setting screen

## Claims

1. An order placement device that places an order for a tinted lens used as an eyeglass lens, comprising:
a processing unit that accepts transmittance data indicating a transmittance of the tinted lens for each of a plurality of wavelength ranges set in advance; and
an output unit that outputs order placement data including the transmittance data that is input.

2. The order placement device according to claim 1,
wherein the processing unit displays, on a display screen, a plurality of input fields for inputting the transmittance data for each of the plurality of wavelength ranges.

3. The order placement device according to claim 2,
wherein the input fields are provided in correspondence with each of the plurality of wavelength ranges, and
wherein the output unit outputs the order placement data including data in which the transmittance data input into the input fields is associated with the wavelength ranges corresponding to the input fields.

4. The order placement device according to claim 1,
wherein the plurality of wavelength ranges are wavelength ranges obtained by dividing a wavelength range of visible light into three parts.

5. The order placement device according to claim 1,
wherein the plurality of wavelength ranges are three regions including a short-wavelength region, a medium-wavelength region, and a long-wavelength region,
wherein the short-wavelength region includes 430 nm,
wherein the medium-wavelength region includes 530 nm, and
wherein the long-wavelength region includes 630 nm.

6. The order placement device according to claim 2,
wherein the transmittance data input into each of the plurality of input fields is a numerical value input in steps of 2% or more and 20% or less.

7. The order placement device according to claim 2,
wherein the processing unit displays, on the display screen, a predicted luminous transmittance and color tone of the tinted lens according to the transmittance data input into each of the plurality of input fields.

8. An order placement method that places an order for a tinted lens used as an eyeglass lens, comprising:
accepting transmittance data indicating a transmittance of the tinted lens for each of a plurality of wavelength ranges set in advance; and
outputting order placement data including the transmittance data accepted.

9. A program that causes a computer to function as the order placement device according to any one of claims 1 to 8.
